# EUROPÄISCHE PATENTANMELDUNG

(11) **EP 4 086 194 A1**
(43) Veröffentlichungstag der Anmeldung: **09.11.2022**
(21) Anmeldenummer: 22169202.3
(22) Anmeldetag: 21.04.2022
(51) Int. Cl.: B65D 88/28, B60P 1/56

(54) **AUSLAUFVORRICHTUNG ZUM ENTLEEREN EINES SILOBEHÄLTERS, SILOBEHÄLTER, FAHRZEUG MIT SILOBEHÄLTER SOWIE VERFAHREN ZUR HERSTELLUNG EINER AUSLAUFVORRICHTUNG**

(30) Priorität: 05.05.2021 DE 202021102429 U
(71) Anmelder: Feldbinder Spezialfahrzeugwerke GmbH, 21423 Winsen/Luhe (DE)
(72) Erfinder: Kley, Wolf-Dietrich, 21423 Winsen/Luhe (DE)
(74) Vertreter: RGTH

(57) **Zusammenfassung**

Um eine Auslaufvorrichtung (100; 110) zum Entleeren eines zum Aufnehmen von Schüttgut ausgebildeten Silobehälters (200), aufweisend einen sich von einem Einlassbereich (10) zu einem Auslassbereich (20) konusförmig verengenden Auslaufkörper (50), der
- zum Führen des Schüttguts vom Einlassbereich (10) zum Auslassbereich (20) ausgebildet ist,
- aus einem Materialstück gefertigt ist,
- nahtlos, insbesondere fügenahtlos, beispielsweise schweißnahtlos, ausgebildet ist,
- an seinem Einlassbereich (10) lösbar oder unlösbar mit dem Silobehälter (200) verbindbar ist und
- an seinem Auslassbereich (20) in einen zylinderförmigen Austrittsabschnitt (30) ausläuft,
so weiterzubilden, dass die Auslaufvorrichtung einfach, kostengünstig und mit geringer Fehleranfälligkeit herstellbar ist, wird vorgeschlagen, dass an dem Austrittsabschnitt (30) ein Losflansch (40) gelagert ist, wobei an dem Losflansch (40) ein zum Lagern oder zum Ableiten des Schüttguts ausgebildetes Anschlusselement befestigbar ist. Weiterhin wird ein entsprechend ausgebildeter Silobehälter sowie ein entsprechendes Fahrzeug vorgeschlagen.

## Beschreibung

### Technisches Gebiet

Die vorliegende Erfindung betrifft eine Auslaufvorrichtung nach dem Oberbegriff des Anspruchs 1. Insbesondere betrifft die vorliegende Erfindung ein Auslaufvorrichtung zum Entleeren eines zum Aufnehmen von Schüttgut, insbesondere von schüttbarem oder von fliessfähigem Material, ausgebildeten Silobehälters, aufweisend einen sich konusförmig von einem Einlassbereich der Auslaufvorrichtung zu einem Auslassbereich der Auslaufvorrichtung verengenden Auslaufkörper, der
- konusartig um eine Achse angeordnet und zum Führen des Schüttguts vom Einlassbereich zum Auslassbereich ausgebildet ist,
- aus einem Materialstück gefertigt ist,
- nahtlos, insbesondere fügenahtlos, beispielsweise schweißnahtlos, ausgebildet ist,
- an seinem Einlassbereich lösbar oder unlösbar mit dem Silobehälter verbindbar ist und
- an seinem Auslassbereich in einen zylinderförmigen Austrittsabschnitt ausläuft.

Die vorliegende Erfindung betrifft des Weiteren einen Silobehälter nach dem Oberbegriff des Anspruchs 8 sowie ein Fahrzeug nach dem Oberbegriff des Anspruchs 10.

Die vorliegende Erfindung betrifft zudem ein Verfahren nach dem Oberbegriff des Anspruchs 11.

### Stand der Technik

Derartige Auslaufvorrichtungen dienen zum Entleeren von Schüttgut, beispielsweise von staub- korn- granulat- oder pelletförmigem Schüttgut, etwa von Getreide, Zement, Kohlestaub, Mehl oder dergleichen, aus Silobehältern.

Üblicherweise werden derartige Auslaufvorrichtungen aus einem gebogenen Blechteil durch Schweißen erstellt. Die dabei gebildete Schweißnaht kann jedoch den freien Materialfluss des Schüttguts in der Auslaufvorrichtung behindern.

Eine nahtlos gebildete trichterförmige Auslaufvorrichtung für einen Silobehälter ist aus der Druckschrift US 2017/0320668 A1 bekannt. Diese trichterförmige Auslaufvorrichtung wird hergestellt durch Verformen eines rotierenden Materialzuschnitts, durch Druckguss, Tiefziehen oder in einer Matrize. Das Schüttgut wird bei dieser Auslaufvorrichtung über einen mittels eines Gewindes angeschlossenen Rohrförderer abgeführt.

Des Weiteren ist eine nahtlos gefertigte Auslaufvorrichtung für einen Transport- oder Lagercontainer in der Druckschrift DE 44 19 504 A1 offenbart. Diese Auslaufvorrichtung wird durch einen Stempel in einer Tiefziehpresse aus einem Blechzuschnitt geformt. Die Auslaufvorrichtung kann in einen Austrittskonusring auslaufen. Das austretende Schüttgut fällt frei in einen Behälter.

Eine Auslaufvorrichtung mit einem Anschlussflansch, an den beispielsweise ein Anschlussstutzen für eine Förderleitung zum Ableiten des Schüttgutes befestigt werden kann, ist aus der Druckschrift EP 1 693 316 U1 bekannt. Der Anschlussflansch ist fest mit der Auslaufvorrichtung verbunden. Ein Ausrichten des Anschlussflansches an die Lage des Anschlussstutzens ist somit nicht möglich.

Die Druckschrift DE 20 2008 00 90 17 U1 offenbart eine Auslaufvorrichtung zum Entleeren eines zum Aufnehmen von Schüttgut ausgebildeten Silobehälters. Diese Auslaufvorrichtung hat einen Schüsseleinsatz mit einem sich konusförmig verengenden Auslaufkörper, der an seinem verengten Endbereich in einen zylinderförmigen Austrittsabschnitt ausläuft. Um die Austrittsöffnung der Auslaufvorrichtung ist ein konzentrischer Flansch ortsfest angeordnet.

Um ein Ausrichten der Flanschverbindung bei der Montage von Rohrleitungssystemen zu ermöglichen, lehrt die Druckschrift DE 10 2016 114 318 A1 die Rohrstutzen mittels mit einer Dichtungsanordnung kombinierter Losflansche zu verbinden. Die Losflansche werden durch endseitige Abwinklungen gehalten, die durch Umbördelung des Rohrstutzenmaterials erzeugt werden. Dabei werden jeweils die axialen Enden der Rohrelemente des Rohrleitungssystems miteinander verbunden.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Auslaufvorrichtung der eingangs genannten Art sowie einen Silobehälter der eingangs genannten Art sowie ein Fahrzeug der eingangs genannten Art sowie ein Verfahren der eingangs genannten Art so weiterzubilden, dass die Auslaufvorrichtung einfach, kostengünstig und mit geringer Fehleranfälligkeit herstellbar ist. Dabei soll insbesondere der Austrittabschnitt der Auslaufvorrichtung derart ausgebildet werden, dass dieser auf einfache Weise passgenau mit einem zum Ableiten des Schüttguts ausgebildeten Anschlusselement verbindbar ist.

Diese Aufgabe wird durch eine Auslaufvorrichtung mit den im Anspruch 1 angegebenen Merkmalen sowie durch einen Silobehälter mit den im Anspruch 8 angegebenen Merkmalen sowie durch ein Fahrzeug mit den im Anspruch 10 angegebenen Merkmalen sowie durch ein Verfahren mit den im Anspruch 11 angegebenen Merkmalen gelöst. Vorteilhafte Ausgestaltungen und zweckmäßige Weiterbildungen der vorliegenden Erfindung sind in den jeweiligen abhängigen Ansprüchen gekennzeichnet.

Mithin basiert die vorliegende Erfindung darauf, dass an dem Austrittsabschnitt ein, insbesondere ringförmiger oder ringscheibenförmiger, Losflansch gelagert ist, wobei der Losflansch dazu ausgebildet ist, ein zum Ableiten des Schüttguts ausgebildetes Anschlusselement zu befestigen. Das Anschlusselement kann beispielsweise ein zum Ableiten des Schüttguts ausgebildetes Förderelement, beispielsweise ein Anschlussstutzen einer Förderleitung oder eines Abgaberohrs, sein. Alternativ kann das Anschlusselement ein zum Aufnehmen des Schüttguts ausgebildeter Behälter, beispielsweise ein Anschlussstutzen eines zum Lagern des Schüttguts ausgebildeten Behälters sein.

Erfindungsgemäß ist der konusartig geformte und zum Führen des Schüttguts vom Einlassbereich zum Auslassbereich ausgebildete Auslaufkörper der Auslaufvorrichtung nahtlos, insbesondere fügenahtlos, beispielsweise schweißnahtlos, ausgebildet.

Der nahtlos oder nahtfrei ausgebildete Auslaufkörper ist aus einem Materialstück, beispielsweise aus einem Blechelement, etwa aus einem Flachmaterialzuschnitt, einstückig geformt. Das Materialstück kann ein Blechzuschnitt sein, der beispielsweise im Wesentlichen Aluminium und/oder Edelstahl aufweist.

Vorzugsweise weist das Materialstück einen kreisförmigen Querschnitt auf.

Der Auslaufkörper ist vorteilhafterweise mittels mindestens eines formenden Verfahrens, insbesondere mittels Zugdruckumformen, beispielsweise mittels Tiefziehen, derart geformt, dass er als ein nahtloses Bauteil ausgebildet ist.

Beispielsweise kann der Auslaufkörper aus einem Materialstück, etwa aus einem kreisförmigen Blechzuschnitt, durch Rollen in einer Matritze gefertigt sein. Der Auslaufkörper kann also ein mittels Zugdruckumformen, insbesondere mittels Tiefziehen, eines Blechzuschnitts geformter Hohlkörper sein.

Da der Auslaufkörper und somit auch der zylinderförmige Austrittsabschnitt des Auslaufkörpers nahtfrei ausgebildet sind, kann der Losflansch passgenau am Austrittsabschnitt angeordnet werden. Zudem kann der Losflansch ohne die Beeinträchtigung der Unebenheiten einer Naht am Austrittsabschnitt ausgerichtet werden. Ein weiterer Vorteil der nahlosen Ausbildung ist, dass das Schüttgut störungsfrei von den Unebenheiten einer Naht durch den Auslaufkörper sowie dessen Austrittsabschnitt fließen kann. In einem nahtlos ausgebildeten Auslaufkörper wird das Schüttgut also besonders gleichmäßig geführt. Zudem ist ein nahtlos ausgebildeter Auslaufkörper optisch besonders schön anzusehen und besonders stabil.

Das Vorsehen eines Losflanschs zum Verbinden der Auslaufvorrichtung mit dem Anschlusselement hat den Vorteil, dass der Losflansch lose, also bewegbar oder verschiebbar, an der Auslaufvorrichtung anordbar ist. Dies ermöglicht es den Losflansch verliersicher am Austrittsabschnitt der Auslaufvorrichtung anzuordnen und dann den verliersicher am Austrittsabschnitt gehaltenen Losflansch derart auszurichten, dass er passgenau an das Anschlusselement anschließbar ist. Der erfindungsgemäße Losflansch ermöglicht somit ein hohes Maß an Flexibilität bei der Wartung und der Montage der Auslaufvorrichtung am Anschlusselement.

Vorteilhafterweise weist der Losflansch im Querschnitt eine zentrale kreisförmige Ausnehmung auf, wobei der Radius der zentralen Ausnehmung so dimensioniert ist, dass der Losflansch verschiebbar an den zylinderförmigen Austrittsabschnitt klemmbar ist.

Zum Befestigen des Anschlusselements an der Auslaufvorrichtung kann der Losflansch mindestens eine zum Aufnehmen eines Befestigungsmittels, etwa einer Schraube oder einer Klemme oder einer Niete oder eines Nagels, ausgebildete Befestigungsöffnung aufweisen. Auslaufvorrichtung und Anschlusselement können also beispielsweise mittels zweier über Befestigungsmittel kraftbeaufschlagte Losflansche miteinander verbindbar sein.

Gemäß einer besonders vorteilhaften Ausführungsform der Erfindung ist der Losflansch von einem umgebördelten Rand der Auslaufvorrichtung gehalten. Dabei ist der umgebördelte Rand durch Umbördeln des zylinderförmigen Endes des Austrittsabschnitts gebildet. Der Losflansch ist also vorteilhafterweise durch endseitige Abwinklungen gehalten oder auf endseitige Abwinklungen aufgesteckt, wobei die endseitigen Abwinklungen durch Umbördelung des Endes des zylinderförmigen Austrittsabschnitts erzeugt werden.

Der Losflansch weist vorteilhafterweise einen zur Auflage auf dem umgebördelten Rand ausgebildeten Auflagebereich auf. Dabei ist der Auflagebereich vorteilhafterweise dazu ausgebildet, derart auf dem umgebördelten Rand angeordnet zu werden, dass der Losflansch unverschiebbar an dem umgebördelten Rand festklemmt. Mittels des umgebördelten Rands kann der Losflansch also ortsfest an der Auslaufvorrichtung fixiert werden.

Vorteilhafterweise wird bei der Herstellung der Auslaufvorrichtung
(i) der Losflansch auf den zylinderförmigen Austrittsabschnitt aufgesteckt,
(ii) optional der Losflansch ausgerichtet und anschließend
(iii) das Ende des zylinderförmigen Austrittsabschnitts durch Rollen so aufgespreizt, dass es einen umgebördelten Rand bildet, mit dem der Losflansch ortsfest gehalten wird.

Um eine geeignete Anschlussfläche für das Anschlusselement bereitzustellen, sind der Losflansch und der umgebördelte Rand vorteilhafterweise bündig zueinander angeordnet. Auf diese Weise stellen der Losflansch und der umgebördelte Rand an ihrem von der Auslaufvorrichtung abgewandten Seite eine zum Anschließen des Anschlusselements ausgebildete ebene Anschlussfläche bereit.

Die Auslaufvorrichtung der vorliegenden Erfindung kann sowohl für stationäre Silobehälter als auch für Silobehälter, die ein Aufbauteil eines Fahrzeuges sind, verwendet werden.

Die Erfindung betrifft auch ein Verfahren zur Herstellung einer Auslaufvorrichtung zum Entleeren eines zum Aufnehmen von Schüttgut ausgebildeten Silobehälters. Dabei wird aus einem Materialstück ein Auslaufkörper derart nahtlos geformt, dass der Auslaufkörper sich konusartig von einem Einlassbereich der Auslaufvorrichtung zu einem Auslassbereich der Auslaufvorrichtung verengt, zum Führen des Schüttguts vom Einlassbereich zum Auslassbereich ausgebildet ist und an seinem Auslassbereich in einen zylinderförmigen Austrittsabschnitt ausläuft, wobei an dem Austrittsabschnitt des Auslaufkörpers ein Losflansch angeordnet wird.

Vorteilhafterweise ist dabei vorgesehen, dass der Auslaufkörper aus einem kreisförmigen Materialstück, insbesondere Blechelement, durch Rollen in einer Matritze gefertigt wird.

Nach einer weiteren vorteilhaften Ausführungsform ist vorgesehen, dass der Auslaufkörper mittels Tiefziehen als nahtloses Bauteil gefertigt wird.

Nach einer besonders vorteilhaften Ausführungsform ist vorgesehen, dass beim Anordnen des Losflansches an dem Austrittsabschnitt in einem ersten Verfahrensschritt der Losflansch mittels einer zentralen Ausnehmung lose auf den zylinderförmigen Austrittsabschnitt aufgesteckt wird, insbesondere an dem zylinderförmigen Austrittsabschnitt lose oder lösbar klemmend angeordnet wird, und in einem weiteren Verfahrensschritt das Ende des zylinderförmigen Austrittsabschnitts durch Rollen so aufgespreizt wird, dass es einen umgebördelten Rand bildet, mit dem der Losflansch ortsfest gehalten wird.

Die vorliegende Erfindung betrifft schließlich die Verwendung mindestens einer Auslaufvorrichtung der vorstehend dargelegten Art und/oder einer nach dem Verfahren der vorstehend dargelegten Art hergestellten Auslaufvorrichtung zum Entleeren des Schüttguts eines nach der vorstehend dargelegten Art ausgebildeten Silobehälters und/oder eines nach der vorstehend dargelegten Art ausgebildeten angetriebenen oder antrieblosen Fahrzeugs.

### Kurze Beschreibung der Zeichnungen

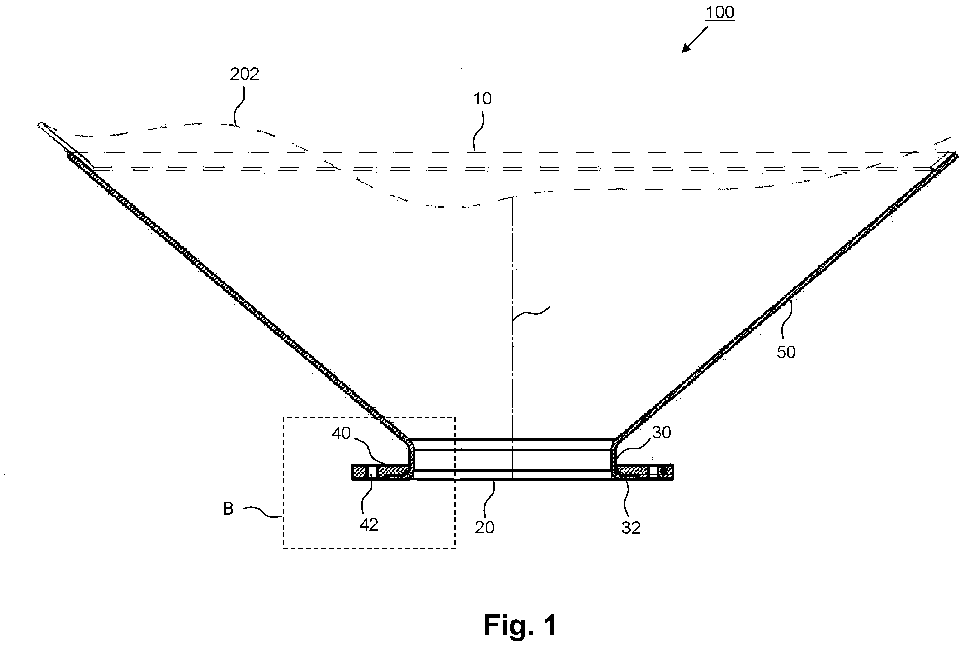

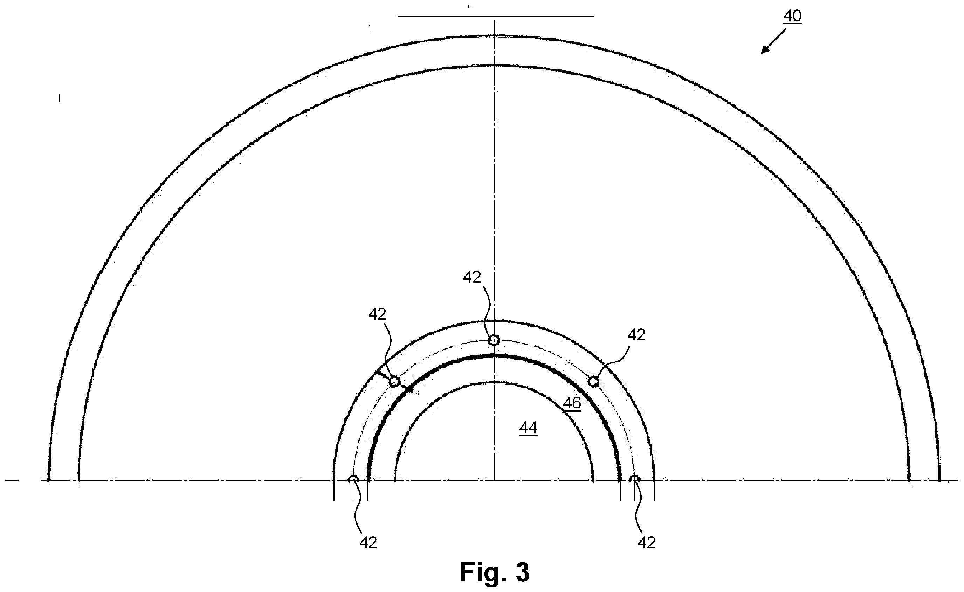

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 8 sowie dem Anspruch 11 nachgeordneten Ansprüche verwiesen, andererseits werden weitere Ausgestaltungen, Merkmale und Vorteile der vorliegenden Erfindung nachstehend unter anderem anhand der durch die Figuren 1 bis 5 veranschaulichten Ausführungsbeispiele näher erläutert.

Es zeigt:
- Fig. 1:: in Längsschnittdarstellung ein erstes Ausführungsbeispiel für eine Auslaufvorrichtung gemäß der vorliegenden Erfindung, die nach dem Verfahren gemäß der vorliegenden Erfindung hergestellt ist;
- Fig. 2:: eine Detailansicht des am Austrittsabschnitt angeordneten Loschflanschs der Auslaufvorrichtung aus Figur 1;
- Fig. 3:: in Querschnittdarstellung die Auslaufvorrichtung aus Figur 1;
- Fig. 4:: in Längsschnittdarstellung ein weiteres Ausführungsbeispiel für eine Auslaufvorrichtung gemäß der vorliegenden Erfindung, die nach dem Verfahren gemäß der vorliegenden Erfindung hergestellt ist und
- Fig. 5:: in schematischer Darstellung ein Ausführungsbeispiel für ein Fahrzeug gemäß der vorliegenden Erfindung mit einem Ausführungsbeispiel für einen Silobehälter gemäß der vorliegenden Erfindung, welcher die in Figur 1 gezeigte Auslaufvorrichtung und/oder die in Figur 4 gezeigte Auslaufvorrichtung aufweist.

Gleiche oder ähnliche Ausgestaltungen, Elemente oder Merkmale sind in den Figuren 1 bis 5 mit identischen Bezugszeichen versehen.

### Bester Weg zur Ausführung der Erfindung

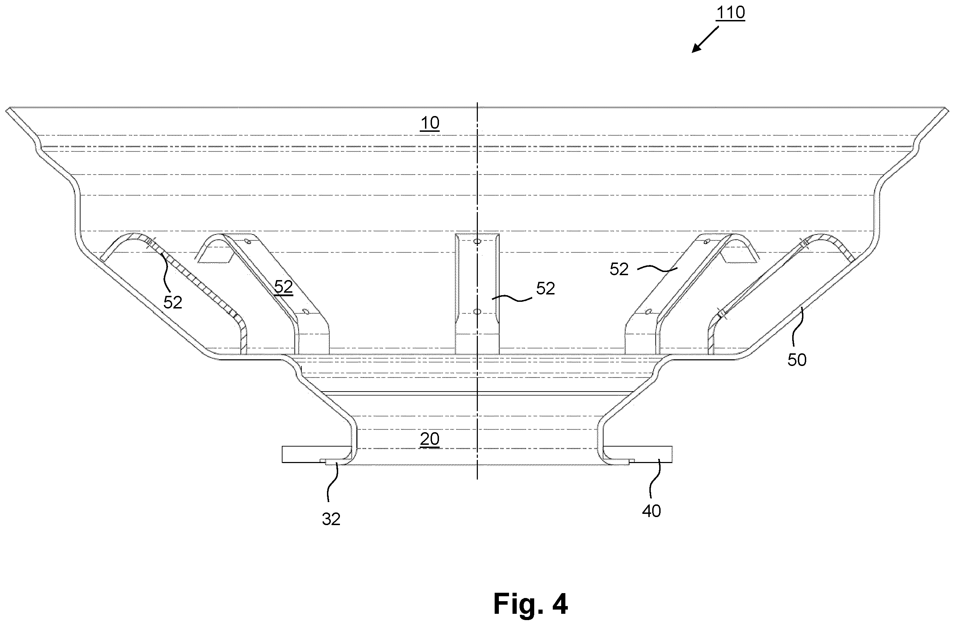

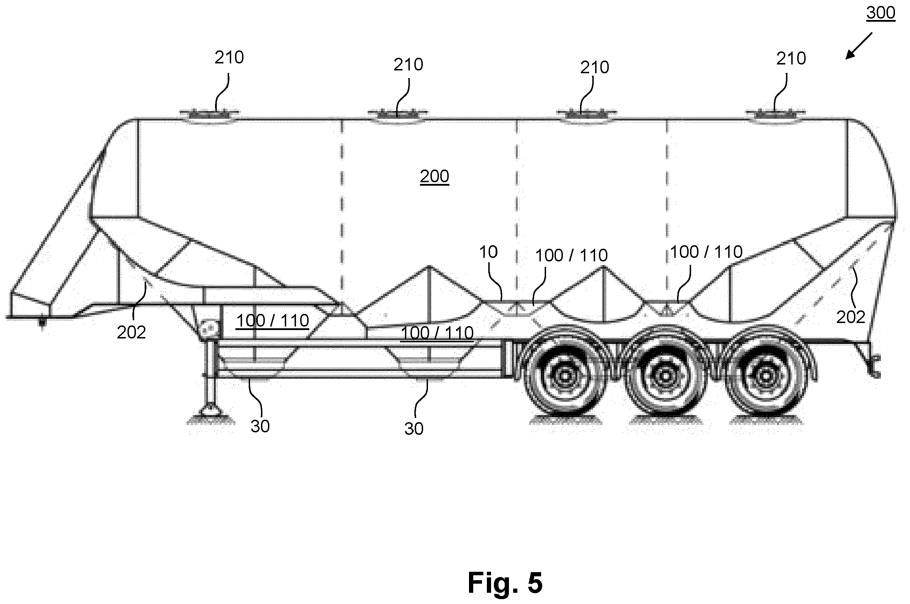

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf das in Figur 1 dargestellte erste Ausführungsbeispiel einer Auslaufvorrichtung 100 gemäß der vorliegenden Erfindung, als auch auf das Figur 4 dargestellte weitere Ausführungsbeispiel einer Auslaufvorrichtung 110 gemäß der vorliegenden Erfindung als auch auf den in Fig. 5 gezeigten Silobehälter 200 als auch auf den in Figur 5 dargestellten Siloanhänger 300 für ein Fahrzeug.

Die Figuren 1 und 4 zeigen jeweils eine Auslaufvorrichtung 100, 110, nämlich eine Konusschüssel 100, 110 mit einem einstückig ausgebildeten Auslaufkörper 50 der als nahtloses Teil aus einem entsprechenden kreisförmigen Blechstück durch Rollen in einer Matrize hergestellt ist.

Der Auslaufkörper 50 definiert eine Innenseite und eine Außenseite der Konusschüssel 100, 110 und hat einen kreisförmigen Querschnitt in einer Ebene senkrecht zur Achse 60 der Konusschüssel 100, 110.

Im Längsschnitt ist der, in den Figuren 1 und 4 gezeigte, Auslaufkörper 50 kegelstumpfartig geformt.

Die Konusschüssel kann, wie in Figur 1 gezeigt, einstückig ausgebildet sein oder, wie in Figur 4 gezeigt, neben dem einstückig ausgebildeten Auslaufkörper 50 weitere Elemente, beispielsweise Stegelemente oder Griffelemente 52, aufweisen.

Der Auslaufkörper 50 kann gleichzeitig den Gehäusekörper der Auslaufvorrichtung 100, 110 bilden oder aber, wie in der Druckschrift DE 20 2008 00 90 17 beschrieben, als Schüsseleinsatz für ein weiteres Gehäusekörperelement der Auslaufvorrichtung ausgebildet sein.

Die Konusschüssel 100, 110 dient zum Entleeren eines zum Aufnehmen von Schüttgut ausgebildeten Silobehälters 200. Als Schüttgut wird vorliegend schüttbares oder fließfähiges Material bezeichnet, beispielsweise staub- korn- granulat- oder pelletförmiges Material, etwa Granulat, Holzpellet, Getreide, Zement, Kohlestaub, Mehl oder dergleichen.

Der Silobehälter 200 kann ein stationärer Silobehälter sein (nicht dargestellt) oder einem antriebslosem oder angetriebenen Fahrzeug zugeordnet sein (vgl. Figur 5). Beispielsweise kann der Silobehälter 200 ein Silocontainer oder ein Silochassis oder, wie in Figur 5 gezeigt, ein Siloaufbau für einen Siloanhänger, etwa für einen Silosattelanhänger oder für einen Kippsilosattelanhänger, oder für einen Silowaggon sein.

Der Silobehälter 200 kann in seinem unteren Bereich mit einem Behälterkonus 202 versehen sein. Dieser Behälterkonus 202 ist in Figur 1 mittels einer gestrichelten Linie dargestellt.

Die Konusschüssel 100, 110 hat einen sich konusförmig verengenden Auslaufkörper 50, wobei der obere, weite Einlassbereich 10 der Konusschüssel 100, 110 fest oder reversibel mit dem Behälterkonus des Silobehälters 200 verbindbar ist. Beispielsweise kann die Konusschüssel 100, 110, wie in der Druckschrift EP 169331 A1 oder in der Druckschrift EP 1 693 316 A1 beschrieben, direkt mit dem Silobehälter 200 verbindbar sein. Alternativ kann die Konusschüssel 100, 110 indirekt, nämlich über ein weiteres Gehäusekörperelement, mit dem Silobehälter verbindbar sein.

An ihrem Auslassbereich 20 läuft die Konusschüssel 100, 110 in einen zylinderförmigen Austrittsabschnitt 30 aus.

Die Form der Innenseite des Auslaufkörpers 50 und die Eigenschaften des Schüttguts bestimmen die Strömung des Schüttguts in der Konusschüssel 100, 110.

Bei dem in Figur 1 gezeigten Ausführungsbeispiel verengt sich der Auslaufkörper 50 geradlinig konusförmig. Diese geradllinige Konusform führt das Schüttgut im Auslaufkörper gleichmäßig schnell.

Alternativ kann, wie in Figur 5 gezeigt, sich der Auslaufkörper 50 krummlinig konusförmig verengen. Beispielsweise kann die Konusform des Auslaufkörpers ein Profil aufweisen, etwa kurvenartig oder treppenartig ausgebildet sein. Bei einer krummlinigen Konusform weisen einzelne Bereiche des Auslaufkörpers 50 unterschiedliche Neigungswinkel zur Achse 60 auf. Der Neigungswinkel des jeweiligen Bereichs des Auslaufkörpers 50 beeinflusst die Geschwindigkeit, mit welcher das Schüttgut vom Einlassbereich 10 zum Auslassbereich 20 der Konusschüssel 110 geführt wird.

Auf den zylinderförmigen Austrittsabschnitt 30 der Konusschüssel 100, 110 ist ein ringscheibenartiger Losflansch 40 aufgesteckt. Dabei ist der Austrittsabschnitt 30 der Konusschüssel 100, 100 in einer zentralen Ausnehmung 44 des Losflanschs 40 aufgenommen. Der Radius der zentralen Ausnehmung 44 ist so dimensioniert, dass der Losflansch 40 lose oder manuell lösbar an den Austrittsabschnitt 30 klemmbar ist. Mit anderen Worten ist der Radius der zentralen Ausnehmung 44 so dimensioniert, dass der auf den zylinderförmigen Abschnitt 30 gesteckte Losflansch 40 bewegbar an diesem gehalten ist. Dabei entspricht bei der in den Figuren 1 bis 5 gezeigten Konusschüssel 100, 110 der Radius der zentralen Ausnehmung 44 im Wesentlichen dem Radius des Außenumfangs des zylinderförmigen Abschnitts 30.

Bei der Herstellung der in den Figuren 1 bis 5 gezeigten Konusschüssel 100, 110 wird nach dem Aufstecken des Losflanschs 40 auf den zylinderförmigen Austrittsabschnitt 30 das Ende des Austrittsabschnitts 30 durch Rollen so aufgespreizt, dass es einen umgebördelten Rand bildet, mit dem der Losflansch 40 gehalten wird.

Der in den Figuren 1 bis 3 gezeigte Losflansch 40 ist derart ausgebildet, dass er vor dem Umbördeln lose, also bewegbar oder verschiebbar, an dem zylinderförmigen Austrittsabschnitt 30 gehalten ist und nach dem Umbördeln ortsfest an dem umgebördelten Rand fixiert ist.

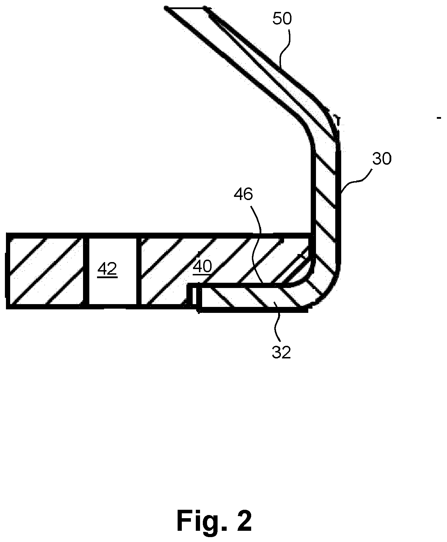

Figur 2 zeigt eine Detailansicht des in Figur 1 mittels eines gestrichelten Rechtecks markierten Bereichs B des am Austrittsabschnitt 30 gehaltenen Losflanschs 40. Der umgebördelte Rand 32 ist im Wesentlichen rechtwinklig zur zylinderförmigen Wand des Austrittsabschnitts 30 angeordnet.

Figur 5 zeigt einen Siloanhänger 300 zum Transport von Schüttgut. Der Siloanhänger 300 weist einen Silobehälter 200 zur Aufnahme von staub- korn-, granulat- oder pelletförmigem Schüttgut auf. Zum Einfüllen des Schüttguts sind im oberen Bereich des Silobehälters 200 mehrere Einfüllöffnungen 210 angeordnet. Zum Entleeren des Silobehälters 200 sind an seinem, in Gebrauchsstellung des Silobehälters 200 dem Untergrund zugewandten, Korpusboden mehrere Konusschüsseln 100, 110 der vorstehend dargelegten Art angeordnet. Die schematisch dargestellten Konusschüsseln 100, 110 können beispielsweise wie die in Figur 1 gezeigte Konusschüssel 100 oder wie die in Figur 5 gezeigte Konusschuüssel 110 ausgebildet sein. Dabei ist der Siloanhänger 300 in mehrere Segmente unterteilt, wobei jedem Segment eine Einfüllöffnung 210 und eine Konusschüssel 100, 110 zugeordnet ist.

Die Konusschüsseln 100, 110 sind fest am Korpusboden des Silobehälters 200 angeordnet. Beispielsweise können die Konusschüsseln 100, 110, wie in Figur 5 gezeigt, einstückig mit dem Silobehälter 200 ausgebildet sein. Alternativ wäre es auch möglich, die Konusschüsseln 100, 110 über einen, am Einlassbereich 10 der Konusschüssel 100, 110 angeordneten, nicht dargestellten Anschlussflansch, lösbar oder unlösbar mit dem Silobehälter 200 zu verbinden.

Zum Verbinden des zum Lagern oder zum Ableiten des Schüttguts ausgebildeten Anschlusselements mit dem Losflansch 40 der Konusschüssel 100, 110 kann das Anschlusselement ebenfalls einen Losflansch, also einen Anschlusselement-Losflansch, aufweisen. Dabei können sowohl der Austrittsvorrichtungs-Losflansch als auch der Anschlusselement-Losflansch jeweils mindestens eine Befestigungsöffnung aufweisen.

Das zum Lagern oder zum Ableiten des Schüttguts ausgebildete Anschlusselement kann beispielsweise eine Förderleitung oder ein Abgaberohr sein. Ferner kann das Anschlusselement nach Art der in der Druckschrift DE 20 2010 007 631 U1 beschriebenen und in Figur 1 der Druckschrift DE 20 2010 007 631 U1 gezeigten Auslaufvorrichtung ausgebildet sein. Des Weiteren kann das Anschlusselement ein zum Lagern des Schüttguts ausgebildeter, beispielsweise stationärer, Silobehälter sein.

Der Vorteil der in den Figuren 1 bis 5 gezeigten Konusschüssel 100, 110 ist zum einen darin zu sehen, dass die Konusschüssel 100, 110 nahtfrei ausgebildet ist. Außerdem ist die Ausrichtung des Losflanschs 40 ganz einfach durchführbar, nämlich vor dem Umbördeln, sodass der Losflansches 40 immer optimal an das Anschlusselement anpassbar ist. Beispielsweise kann auf diese Weise ein Lochbild des Losflansches 40 immer optimal an ein Lochbild des entsprechenden Anschlusselementes angepasst werden.

### Bezugszeichenliste

- 10: Einlassbereich, insbesondere weiter Endbereich, des konusförmigen Körpers der Auslaufvorrichtung 100, 110, beispielsweise der Grundfläche des kegelstumpfförmigen Körpers der Auslaufvorrichtung 100, 110 zugeordneter, in Gebrauchsstellung oberer Endbereich
- 20: Auslassbereich, insbesondere verengter Endbereich,des konusförmigen Körpers der Auslaufvorrichtung 100, 110, beispielsweise der Deckfläche des kegelstumpfförmigen Körpers der Auslaufvorrichtung 100, 110 zugeordneter, in Gebrauchsstellung unterer Endbereich
- 30: zylinderförmiger Austrittsabschnitt der Auslaufvorrichtung 100, 110
- 32: umgebördelter Rand des Austrittsabschnitts 30
- 40: Losflansch, insbesondere ringförmiger Losflansch
- 42: Befestigungsöffnung des Losflanschs 40
- 44: zentrale Ausnehmung des Losflanschs 40
- 46: zum Aufliegen auf dem umgebördelten Rand 32 ausgebildeter Auflagebereich des Losflanschs 40
- 50: Auslaufkörper der Auslaufvorrichtung 100, 110
- 52: weiteres Element des Auslaufkörpers 50, beispielsweise Stegelement oder zum Handhaben der Auslaufvorrichtung 100, 110 ausgebildetes Griffelement
- 60: Achse, insbesondere Längsachse, der Auslaufeinrichtung 100, 110
- 100: Auslaufeinrichtung oder Auslaufvorrichtung oder Materialausgabevorrichtung, erstes Ausführungsbeispiel (vgl. Figuren 1 bis 3), insbesondere Konusschüssel, beispielsweise nahtfreier Aulsass, etwa Abgabetrichter, zum Entleeren eines zum Aufnehmen von Schüttgut ausgebildeten Silobehälters 200
- 110: Auslaufeinrichtung oder Auslaufvorrichtung oder Materialausgabevorrichtung, weiteres Ausführungsbeispiel (vgl. Figur 4), insbesondere Konusschüssel, beispielsweise nahtfreier Aulsass, etwa Abgabetrichter, zum Entleeren eines zum Aufnehmen von Schüttgut ausgebildeten Silobehälters 200
- 200: Silobehälter zum Aufnehmen, insbesondere zum Lagern und/oder zum Transportieren, von Schüttgut, insbesondere von staub- korn-, granulat- oder pelletförmigem Schüttgut, insbesondere Silocontainer oder Silochassis oder Silosattelanhänger, Kippsilosattelanhänger, Siloaufbau, Siloanhänger oder Silowaggon
- 202: Behälterkonus des Silobehälters 200
- 210: Einfüllöffnung zum Einfüllen des Schüttguts
- 300: Angetriebenes oder antriebloses Fahrzeug zum Transport von Schüttgut, beispielsweise Siloanhänger, etwa Silosattelanhänger, Kippsilosattelanhänger, Siloaufbau, Siloanhänger oder Silowaggon, oder Fahrzeug mit einem Siloanhänger
- B: in Figur 1 mittels eines Rechtecks mit gestrichelter Linie markierter Bereich, der in Figur 2 als Detailansicht dargestellt ist.

## Patentansprüche

1. Auslaufvorrichtung (100; 110) zum Entleeren eines zum Aufnehmen von Schüttgut ausgebildeten Silobehälters (200), aufweisend einen sich von einem Einlassbereich (10) zu einem Auslassbereich (20) konusförmig verengenden Auslaufkörper (50), der
- zum Führen des Schüttguts vom Einlassbereich (10) zum Auslassbereich (20) ausgebildet ist,
- aus einem Materialstück gefertigt ist,
- nahtlos, insbesondere fügenahtlos, beispielsweise schweißnahtlos, ausgebildet ist,
- an seinem Einlassbereich (10) lösbar oder unlösbar mit dem Silobehälter (200) verbindbar ist und
- an seinem Auslassbereich (20) in einen zylinderförmigen Austrittsabschnitt (30) ausläuft,
**dadurch gekennzeichnet, dass**
an dem Austrittsabschnitt (30) ein Losflansch (40) gelagert ist, wobei an dem Losflansch (40) ein zum Lagern oder zum Ableiten des Schüttguts ausgebildetes Anschlusselement befestigbar ist.

2. Auslaufvorrichtung nach Anspruch 1, **dadurch gekennzeichnet, dass** der Auslaufkörper (50) ein mittels Tiefziehen geformter nahtloser Hohlkörper ist.

3. Auslaufvorrichtung nach Anspruch 1 oder 2, **dadurch gekennzeichnet, dass** der Auslaufkörper (100; 110) aus einem kreisförmigen Blechelement durch Rollen in einer Matritze gefertigt ist.

4. Auslaufvorrichtung nach mindestens einem der Ansprüche 1 bis 3, **dadurch gekennzeichnet, dass** der Losflansch (40) eine zentrale Ausnehmung (44) aufweist, wobei der Radius der zentralen Ausnehmung (44) so dimensioniert ist, dass der Losflansch (40) lose oder manuell lösbar an den zylinderförmigen Abschnitt (30) klemmbar ist.

5. Auslaufvorrichtung nach mindestens einem der Ansprüche 1 bis 4, **dadurch gekennzeichnet, dass**
- der Austrittsabschnitt (30) einen umgebördelten Rand (32) aufweist und
- der Losflansch (40) auf dem umgebördelten Rand (32) des Austrittsabschnitts (30) lagert.

6. Auslaufvorrichtung nach Anspruch 5, **dadurch gekennzeichnet, dass**
- der Losflansch (40) eine zur Aufnahme des zylinderförmigen Austrittsabschnitts (30) ausgebildete, zentrale Ausnehmung (44) aufweist,
- der Losflansch (40) mittels der zentralen Ausnehmung (44) lose auf den zylinderförmigen Austrittsabschnitts (30) aufgesteckt ist,
- der Losflansch (40) einen zur Auflage auf dem umgebördelten Rand (32) ausgebildeten Auflagebereich (46) aufweist und
- der Auflagebereich (46) dazu ausgebildet ist derart auf dem umgebördelten Rand (32) angeordnet zu werden, dass der Losflansch (40) unverschiebbar an dem umgebördelten Rand (32) festklemmt.

7. Auslaufvorrichtung nach Anspruch 5 oder 6, **dadurch gekennzeichnet, dass** der Losflansch (40) und der umgebördelte Rand (32) bündig zueinander angeordnet sind und an ihrem von der Auslaufvorrichtung (100; 110) abgewandten Bereich auf gleicher Ebene liegen.

8. Silobehälter (200) zur Aufnahme von staub- korn- oder pelletförmigem Schüttgut, aufweisend mindestens eine Einfüllöffnung (210) zum Einfüllen des Schüttguts, **dadurch gekennzeichnet, dass** am, in Gebrauchsstellung des Silobehälters (200) dem Untergrund zugewandten, Korpusboden des Silobehälters (200) mindestens eine Auslaufvorrichtung (100; 110) nach mindestens einem der Ansprüche 1 bis 7 angeordnet ist.

9. Silobehälter nach Anspruch 8, **dadurch gekennzeichnet, dass** die Auslaufvorrichtung (100; 110) fest mit dem Korpusboden des Silobehälters (200) verbunden ist.

10. Angetriebenes oder antriebloses Fahrzeug (300) zum Transport von Schüttgut, aufweisend mindestens einen Silobehälter (200) nach Anspruch 8 oder 9.

11. Verfahren zur Herstellung einer Auslaufvorrichtung (100; 110) zum Entleeren eines zum Aufnehmen von Schüttgut ausgebildeten Silobehälters (200), wobei (i) aus einem Materialstück ein Auslaufkörper (50) derart nahtlos geformt wird, dass der Auslaufkörper (50)
- sich konusartig von einem Einlassbereich (10) der Auslaufvorrichtung (100; 110) zu einem Auslassbereich (20) der Auslaufvorrichtung (100; 110) verengt,
- zum Führen des Schüttguts vom Einlassbereich (10) zum Auslassbereich (20) ausgebildet ist und
- an seinem Auslassbereich (20) in einen zylinderförmigen Austrittsabschnitt (30) ausläuft, **dadurch gekennzeichnet, dass** (ii) an dem Austrittsabschnitt (30) des Auslaufkörpers (50) ein Losflansch (40) angeordnet wird.

12. Verfahren nach Anspruch 11, **dadurch gekennzeichnet, dass** der Auslaufkörper (50) aus einem kreisförmigen Materialstück, insbesondere Blechelement, durch Rollen in einer Matritze gefertigt wird.

13. Verfahren nach Anspruch 10 oder 11, **dadurch gekennzeichnet, dass** der Auslaufkörper (50) mittels Tiefziehen als nahtloses Bauteil gefertigt wird.

14. Verfahren nach mindestens einem der Ansprüche 11 bis 13, **dadurch gekennzeichnet, dass** beim Anordnen des Losflansches (40) an dem Austrittsabschnitt (30)
(iia) in einem ersten Verfahrensschritt der Losflansch (40) mittels einer zentralen Ausnehmung (44) lose auf den zylinderförmigen Austrittsabschnitt (30) aufgesteckt wird, insbesondere an dem zylinderförmigen Austrittsabschnitt (30) lose oder lösbar klemmend angeordnet wird, und (iib) in einem weiteren Verfahrensschritt das Ende des zylinderförmigen Austrittsabschnitts (30) durch Rollen so aufgespreizt wird, dass es einen umgebördelten Rand (32) bildet, mit dem der Losflansch (40) ortsfest gehalten wird.

15. Verwendung einer Auslaufvorrichtung (100; 110) nach mindestens einem der Ansprüche 1 bis 7 und/oder einer nach dem Verfahren nach mindestens einem der Ansprüche 11 bis 14 hergestellten Auslaufvorrichtung (100; 110) zum Entleeren des Schüttguts eines nach Anspruch 8 oder 9 ausgebildeten Silobehälters (200) und/oder eines nach Anspruch 10 ausgebildeten angetriebenen oder antrieblosen Fahrzeugs (300).
